# EUROPEAN PATENT SPECIFICATION

(11) **EP 0 504 891 B1**
(45) Date of publication and mention of the grant of the patent: **07.02.1996**
(21) Application number: 92104801.3
(22) Date of filing: 19.03.1992
(51) Int. Cl.: A47F 7/24, F16B 7/14, F16B 7/04

(54) **Display stand**
Schauständer
Présentoir

(30) Priority: 19.03.1991 FI 911332
(43) Date of publication of application: 23.09.1992
(73) Proprietor: GWS Pikval Oy, SF-40800 Vaajakoski (FI)
(72) Inventor: Oksanen, Hannu, SF-40740 Jyväskylä (FI)
(74) Representative: Bockhorni, Josef, Dipl.-Ing.

(56) References cited:
- GB-A- 2 194 435
- US-A- 1 449 196
- US-A- 2 921 763

## Description

The present invention relates to a display stand, e.g. for clothes, which comprises an adjusting tube arranged slidably in a frame tube and to which adjusting tube is connectable a display part for carrying clothes etc.

The height position of the display part is adjustable by moving the adjusting tube in relation to the frame tube. For locking the tubes to each other into desired position, different kinds of friction locking means have often been used, such as friction plates or friction rolls, which have the disadvantage that they have not remained in place when under load. Mechanical adjustment means of step-wise function have also been used.

In document GB-A-2 194 435 an adjustable height display stand is disclosed, comprising a base unit supporting an upper unit on which items may be displaced, the upper unit being movable relative to the base unit and fixable in one of a number of predetermind positions relative to the base unit by operation of a latch. This turnable latch is positioned in the lower part of the adjustment tube, and extends through an aperture in the wall of the adjustment tube, as well as through an aperture in the wall of a frame tube in locking position. Furthermore, an arm which interacts with the latch for turning this from locking position to unlocked position is positioned in the upper part of the adjusting tube. What has to be seen as a serious drawback with the arrangement disclosed in the above cited document is the fact that the whole mechanism for locking the stand in different heights is extremely unreliable due to its mechanical simplicity.

Furthermore, document US-A-2 921 763 discloses a clothes stand that can be collapsed, the parts being folded up to occupy a small space only. The height adjustment of the arrangement disclosed in this document, although providing step-wise adjustability, is unconvenient and difficult to use.

It is an object of the invention to provide a near display stand or the like, with a step-wise height adjusting of the adjusting tube in relation to the frame tube, for reliable locking and easy handling.

This object is achieved by means of the display stand according to the present invention provided with an arm that interacts with a locking element for turning the latter from the locking position to a position inside the adjusting tube, mainly characterized in
that said arm is connected to a slide gliding inside the adjusting tube, a spring is arranged above the slide, and above the spring, in abutting connection, is provided a mounting part, for the display part, provided with a receiving aperture for the display part and a bolt for locking the display part in place, wherein the spring ensures the return movement of the slide and thus the turning of the locking element into locking position when the adjusting tube is in desired height position in relation to the frame tube.

Thus a new, reliable connection for the display part mountable to the adjusting tube, which does not require welding and which in an easy way makes variations possible to meet a client's desire.

Preferred embodiments of the invention are defined in the dependent claims 2 to 5.

In the following the invention will be described with reference to a preferred embodiment, by way of example, shown in the attached drawing.

Figure 1 shows a display stand seen in perspective.

Figures 2 and 3 show partial sections of the adjustment tube, including locking means.

Figure 4 shows a section along line A-A in figure 3.

Figure 5 shows the locking and mounting means in an exploded view.

Figure 6 illustrates the function of the locking element.

Figures 7 and 8 illustrate fastening of a display part to the adjusting tube.

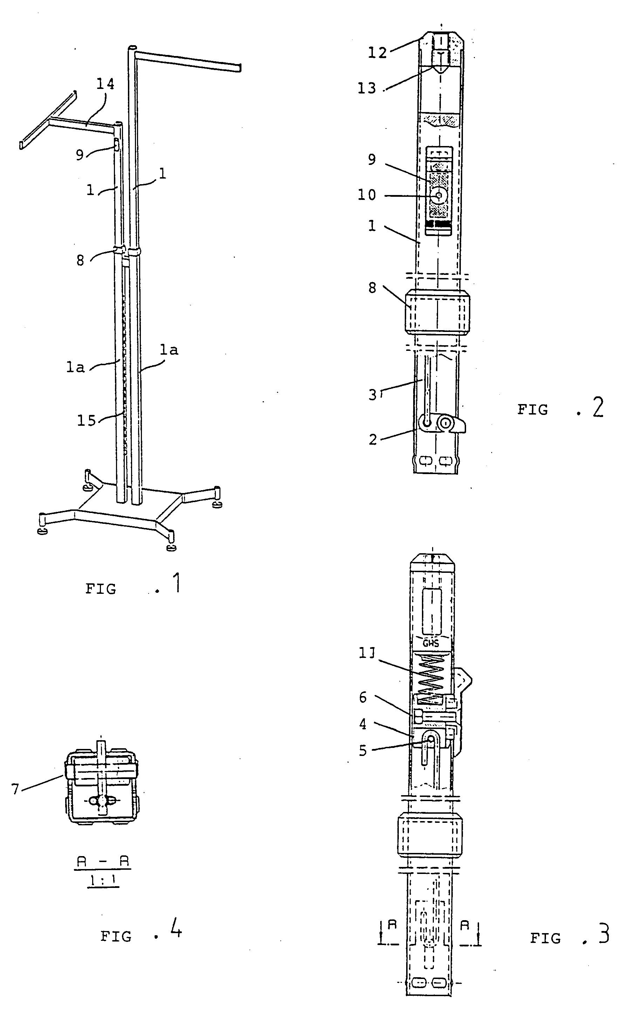

Figure 1 shows a double stand wherein two adjusting tubes 1 are arranged slidably into a respective frame tube 1a supported by a base. The adjusting tube slides inside the frame tube guided by a sleeve 8 and by protrudings in the lower part. A display part 14 is mounted to the upper part of the adjustment tube. Of the interlocking arrangement for the adjusting tube and the frame tube, an adjusting arm 9 and apertures 15 made in the frame tube wall are visible in figure 1.

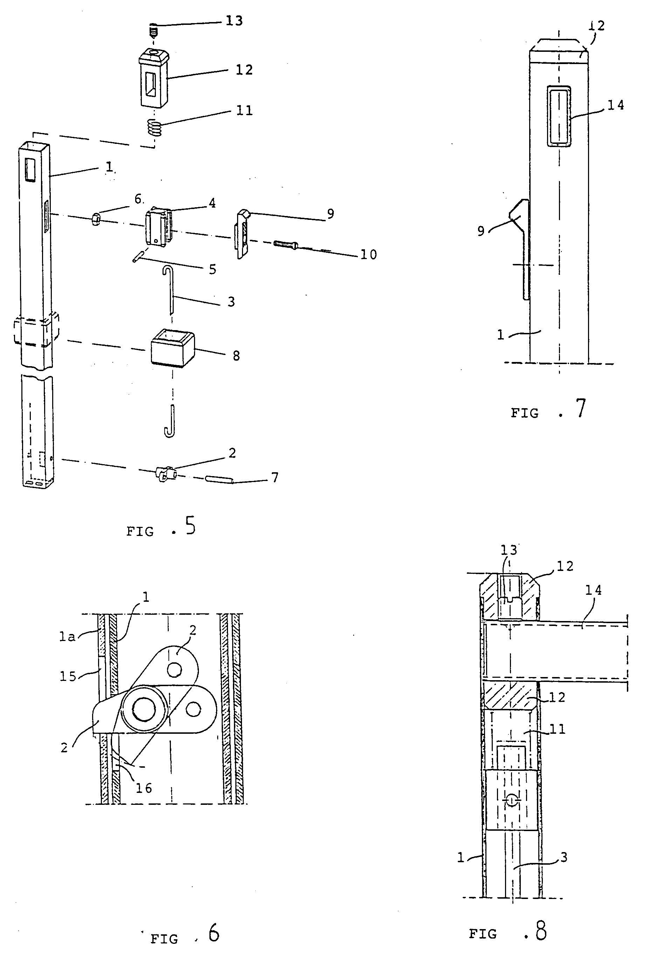

The structure and the function of the locking arrangement appear from figures 2-6. Reference numeral 2 designates a latch-like locking element, 3 designates a lifting wire connected to the locking element 2, 4 designates a slide connected to the upper end of the lifting wire 3, sais slide being arranged inside the adjusting tube and being, preferably, made of plastics material, 5 designates a spring cotter pin fastened to the slide 4, 6 designates a nut, 7 designates a rivet acting as a support and turning axle for the locking element 2, 8 designates a guide sleeve for the adjusting tube, 9 designates an adjusting arm, 10 designates a bolt for fastening, together with the nut 6, the adjusting arm 9 to the slide 4, 11 designates a spring, 12 designates a tube fastener and 13 designates a retaining bolt. For adjustment in height, the adjusting arm 9 is moved upwards, whereat the locking element 2, through interaction by the slide 4, the spring cotter pin 5 and the lifting wire 3, turns from the locking position of figure 2 to the freeing position of figure 6 (locking element 2 inclined), where the locking element is within the frame tube and whereat the adjusting tube is freely movable in the vertical direction.

After choosing the desired height, the adjusting arm is released, whereat the spring 11 ensures downward movement of the slide 4 and the locking element 2 turns into original position. In this position, the point of the locking element extends out through a respective adjusting aperture in the frame tube 1a and locks the adjusting tube 1 reliably in place in support by the upper edge of an aperture 16 in the wall of the adjusting tube.

In a side of the upper part of the adjusting tube is formed an aperture, which permits different display parts 14 to be mounted by means of a tube fastener element 12 and a retaining bolt 13.

In addition, the threaded aperture of the tube fastener element 12 is long enough to permit mounting of a poster arm or the like.

## Claims

1. A display stand, e.g. for clothes, which comprises an adjusting tube (1) arranged slidably in a frame tube (1a) and to which adjusting tube is connectable a display part for carrying clothes etc., in which stand the lower part of the adjusting tube (1) is provided with a turnable locking element (2) which in locking position extends through an aperture (16) made in the wall of the adjusting tube (1) and through an aperture (15) made in the wall of the frame tube (1a), respectively, and
the upper part of the adjusting tube (1) is provided with an arm (9) which interacts with the locking element (2) for turning this from locking position to a position inside the adjusting tube (1),
**characterized in**
that said arm (9) is connected to a slide (4) gliding inside the adjusting tube,
a spring (11) is arranged above the slide (4), and
above the spring (11) in abutting connection, is provided a mounting part (12) for the display part (14), provided with a receiving aperture for the display part and a bolt (13) for locking the display part (14) in place, wherein the spring (11) ensures the return movement of the slide (4) and thus the turning of the locking element (2) into locking position when the adjusting tube (1) is in desired height position in relation to the frame tube (1a).

2. A display stand according to claim 1, wherein the slide (4) is connected to the locking element by means of a stiff lifting wire (3).

3. A display stand according to claim 1, wherein the slide (4) is of plastics material.

4. A display stand according to claim 1, wherein the adjusting arm (9) is arranged to glide along the outer surface of the adjusting tube (1).

5. A display stand according to claim 1, wherein the bore for the retaining bolt (13) of the display part (14) is clearly longer than the retaining bolt (13).

## Patentansprüche

1. Displayständer, beispielsweise für Kleidung, mit einer Einstellröhre (1), die gleitend in einer Rahmenröhre (1a) angeordnet ist, wobei die Einstellröhre mit einem Displayteil zur Aufnahme von Kleidung etc. verbindbar ist, wobei bei dem Ständer der untere Teil der Einstellröhre (1) mit einem drehbaren Sperrelement (2) versehen ist, das sich in Sperrposition jeweils durch eine Öffnung (16) erstreckt, die in der Wandung der Einstellröhre (1) ausgebildet ist und durch eine Öffnung (15), die in der Wandung der Rahmenröhre (1a) ausgebildet ist und wobei der obere Teil der Einstellröhre (1) mit einem Arm (9) versehen ist, der mit dem Sperrelement (2) zusammenwirkt, um dieses aus einer Sperrposition in eine Position innerhalb der Einstellröhre (1) zu drehen, **dadurch gekennzeichnet**, daß der Arm (9) mit einem Schlitten (4) verbunden ist, der innerhalb der Einstellröhre gleitet, daß eine Feder (11) oberhalb des Schlittens (4) angeordnet ist und daß oberhalb der Feder (11) ein Montageteil (12) für das Displayteil (14) in aneinanderstoßender Verbindung vorgesehen ist, und daß dieses mit einer Aufnahmeöffnung für das Displayteil versehen ist sowie mit einem Bolzen (13) zur Befestigung des Displayteiles (14) an Ort und Stelle, wobei die Feder (11) die Rückkehrbewegung des Schlittens (4) sichert und damit das Drehen des Sperrelementes (2) in Sperrposition, wenn die Einstellröhre (1) in gewünschter Höhenposition bezüglich der Rahmenröhre (1a) ist.

2. Displayständer nach Anspruch 1, **dadurch gekennzeichnet**, daß der Schlitten (4) mit dem Sperrelement mittels eines steifen Hebedrahtes (3) verbunden ist.

3. Displayständer nach Ansprch 1, **dadurch gekennzeichnet**, daß der Schlitten (4) aus einem Kunststoffmaterial gemacht ist.

4. Displayständer nach Anspruch 1, **dadurch gekennzeichnet**, daß der Einstellarm (9) so angeordnet ist, daß er entlang der äußeren Fläche der Einstellröhre (1) gleitet.

5. Displayständer nach Anspruch 1, **dadurch gekennzeichnet**, daß die Bohrung für den Rückhaltebolzen (13) des Displayteiles (14) deutlich länger ist als der Rückhaltebolzen (13).

## Revendications

1. Présentoir, par exemple pour des vêtements, qui comprend un tube d'ajustement (1) disposé de façon glissable dans un tube cadre (1a) et auquel tube d'ajustement est connectable une pièce de présentation pour porter des vêtements, etc, présentoir dans lequel la partie inférieure du tube d'ajustement (1) est prévue avec un élément de verrouillage tournable (2) qui, en position de verrouillage, s'étend à travers une ouverture (16) faite dans la paroi du tube d'ajustement (1) et à travers une ouverture (15) faite dans la paroi du tube cadre (1a), respectivement, et la partie supérieure du tube d'ajustement (1) est prévue avec un doigt (9) qui interagit avec l'élément de verrouillage (2) pour tourner celui-ci de la position de verrouillage à une position à l'intérieur du tube d'ajustement (1),
caractérisé en ce que
ledit doigt (9) est relié à un coulisseau (4) glissant à l'intérieur du tube d'ajustement,
un ressort (11) est disposé au-dessus du coulisseau (4), et au-dessus du ressort (11), en connexion d'aboutement, est prévue une pièce de montage (12) pour la pièce de présentation (14), prévue avec une ouverture réceptrice pour la pièce de présentation et une vis (13) pour verrouiller la pièce de présentation (14) en place, dans lequel le ressort (11) assure le mouvement de retour du coulisseau (4) et ainsi la rotation de l'élément de verrouillage (2) en position de verrouillage quand le tube d'ajustement (1) est en position de hauteur souhaitée par rapport au tube cadre (1a).

2. Présentoir selon la revendication 1, dans lequel le coulisseau (4) est relié à l'élément de verrouillage à l'aide d'une tige de levage rigide (3).

3. Présentoir selon la revendication 1, dans lequel le coulisseau (4) est de matière plastique.

4. Présentoir selon la revendication 1, dans lequel le bras d'ajustement (9) est disposé pour glisser le long de la surface externe du tube d'ajustement (1).

5. Présentoir selon la revendication 1, dans lequel le trou pour la vis de maintien (13) de la pièce de présentation (14) est nettement plus long que la vis de rétention (13).
